(19) Europäisches Patentamt
European Patent Office
Office européen des brevets

(11) EP 4 436 791 B1

(12) FASCICULE DE BREVET EUROPEEN

(45) Date de publication et mention de la délivrance du brevet:
**08.10.2025 Bulletin 2025/41**

(21) Numéro de dépôt: **22817653.3**

(22) Date de dépôt: **14.11.2022**

(51) Classification Internationale des Brevets (IPC):
***B60C 1/00*** *(2006.01)* ***C08C 19/22*** *(2006.01)*
***C08L 47/00*** *(2006.01)* ***C08F 210/02*** *(2006.01)*

(52) Classification Coopérative des Brevets (CPC):
(C-Sets disponibles)
**C08C 19/22; B60C 1/00; B60C 1/0016; C08F 210/02; C08L 47/00** (Cont.)

(86) Numéro de dépôt international:
**PCT/EP2022/081702**

(87) Numéro de publication internationale:
**WO 2023/088813 (25.05.2023 Gazette 2023/21)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.11.2021 FR 2112329**

(43) Date de publication de la demande:
**02.10.2024 Bulletin 2024/40**

(73) Titulaire: **COMPAGNIE GENERALE DES ETABLISSEMENTS MICHELIN**
**63000 Clermont-Ferrand (FR)**

(72) Inventeurs:
- **MAMMERI, Kahina**
  **63040 CLERMONT-FERRAND CEDEX 09 (FR)**
- **PIBRE, Guillaume**
  **63040 CLERMONT-FERRAND CEDEX 09 (FR)**
- **FERRAND, Thomas**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 2 746 332**
**WO-A1-2020/094993**
**JP-A- 2010 189 613**
**JP-A- 2013 234 252**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 210/02, C08F 4/52;**
**C08L 47/00, C08L 83/08, C08L 91/06, C08K 3/36, C08K 5/31, C08K 5/3445, C08K 5/18, C08K 5/09, C08K 3/22, C08K 3/06, C08K 5/47;**
C08F 210/02, C08F 236/06, C08F 232/06

## Description

Le domaine de la présente invention est celui des compositions de caoutchouc qui comprennent une silice et un élastomère diénique fortement saturé et qui sont notamment destinées à être utilisées dans la fabrication de pneumatique.

Des compositions de caoutchouc renforcées d'une silice et comprenant un élastomère diénique fortement saturé sont connues des documents WO 2014114607 A1 et WO 2018224776 A1. L'élastomère diénique fortement saturé est un copolymère d'éthylène et d'un 1,3-diène comme le 1,3-butadiène et a la particularité de contenir plus de 50% en mole d'unité éthylène. En raison de sa teneur élevée en éthylène et de son faible taux d'unité diénique inférieur à 50% en mole, il se distingue largement des élastomères diéniques qui sont traditionnellement utilisés dans les compositions de caoutchouc et qui contiennent généralement plus de 50% en mole d'unité diénique, comme les polybutadiènes, les polyisoprènes et les copolymères de 1,3-butadiène ou d'isoprène et de styrène. Il a notamment la particularité de conférer à une composition de caoutchouc un compromis différent de propriété entre la rigidité et l'hystérèse.

Il existe toujours un besoin d'améliorer encore les propriétés à la rupture des compositions de caoutchouc renforcées d'une silice et contenant un élastomère diénique fortement saturé.

Les inventeurs ont découvert une nouvelle composition de caoutchouc renforcée d'une silice et contenant un élastomère diénique fortement saturé et présentant des propriétés à la rupture à l'état cuit améliorées.

Ainsi, l'invention concerne une composition de caoutchouc qui comprend :

- un élastomère diénique fortement saturé fonctionnel, copolymère qui contient des unités éthylène, des unités d'un 1,3-diène et qui porte des groupes pendants contenant une fonction imidazole N-substituée, les unités éthylène représentant plus de 50% en mole des unités de répétition constitutives de l'élastomère diénique fortement saturé fonctionnel,
- un système de vulcanisation,
- une charge renforçante qui contient une silice,
- et un agent de couplage silane organofonctionnel ayant au moins une fonction thiol bloquée, au moins une fonction thiol et au moins une fonction qui est un groupe hydroxyalcoxysilyle ou un groupe dialcoxysilyle cyclique et répondant à la formule (1)

$$(A)_p(B)_q \qquad (1)$$

dans laquelle A et B représentent respectivement un motif mercaptosilane bloqué répondant à la formule (2) et un motif mercaptosilane répondant à la formule (3)

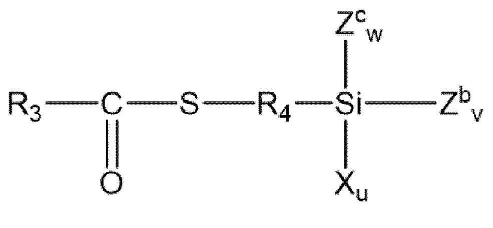

(2)

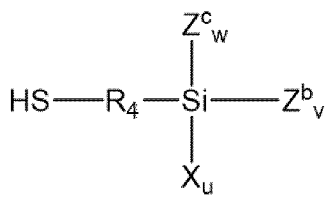

(3)

dans lesquelles

$R_3$ est choisi parmi un atome d'hydrogène, un alkyle en $C_1$-$C_{18}$ , linéaire ou ramifié, un alcényle en $C_2$-$C_{18}$, linéaire ou ramifié,

chaque $R_4$ est indépendamment choisi parmi les groupes divalents hydrocarbonés saturés en $C_1$-$C_6$, linéaires ou ramifiés,

chaque $Z^b$ qui forme une structure de pontage entre un atome de silicium d'un motif et un atome de silicium d'un autre motif, ces motifs pouvant être identiques ou différents, est choisi indépendamment parmi $(\text{-O-})_{0,5}$ et $[\text{-O}(R^0CR^0)_f\text{O-}]_{0,5}$ avec les symboles $R^0$, identiques ou différents, représentant chacun un atome d'hydrogène ou un alkyle en $C_1$-$C_3$ et f étant un nombre compris dans un domaine allant de 2 à 15,

chaque $Z^c$ qui forme une structure cyclique avec l'atome de silicium d'un motif est un groupe de formule $[-O(R^0CR^0)_fO-]_{0,5}$ avec $R^0$ et f tels que définis précédemment,

chaque X est choisi indépendamment parmi un atome d'hydrogène, un groupe hydroxyle, un groupe alkyle en $C_1$-$C_6$, un groupe alcoxyle en $C_1$-$C_6$ et un groupe de formule $HO(R^0CR^0)_fO$-avec $R^0$ et f tels que définis précédemment,

avec u+v+2w=3, u étant un nombre égal à 0, 1, 2 ou 3, v étant un nombre égal à 1, 2 ou 3 et w étant un nombre égal à 0 ou 1,

p est un nombre compris dans un domaine allant de 1 à 20,

q est un nombre compris dans un domaine allant de 1 à 20.

L'invention concerne également un pneumatique qui comprend une composition de caoutchouc conforme à l'invention, préférentiellement dans sa bande de roulement.

## Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Sauf indication contraire, les taux des unités dans un polymère tel que l'élastomère diénique fortement saturé fonctionnel utile à l'invention sont exprimés en pourcentage molaire par rapport à la totalité des unités de répétition constitutives (en anglais « constitutional repeating unit », également désignée sous l'abréviation CRU par IUPAC) du polymère.

L'élastomère utile aux besoins de l'invention est un élastomère diénique fortement saturé fonctionnel, de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. L'élastomère diénique fortement saturé fonctionnel est riche en unité éthylène, puisque les unités éthylène représentent plus de 50% en mole des unités de répétition constitutives de l'élastomère diénique fortement saturé fonctionnel.

De préférence, l'élastomère diénique fortement saturé fonctionnel comprend au moins 60% molaire d'unité éthylène, préférentiellement au moins 65% molaire d'unité éthylène, plus préférentiellement au moins 70% molaire d'unités éthylène.

De préférence, l'élastomère diénique fortement saturé fonctionnel comprend au plus 90% molaire d'unité éthylène. De manière plus préférentielle, il comprend au plus 85% molaire d'unité éthylène. De manière encore plus préférentielle, il comprend au plus 80% molaire d'unité éthylène.

Selon un mode de réalisation avantageux, l'élastomère diénique fortement saturé fonctionnel comprend de 60% à 90% molaire d'unité éthylène, particulièrement de 60% à 85% molaire d'unité éthylène. Plus avantageusement, l'élastomère diénique fortement saturé fonctionnel comprend de 60% à 80% molaire d'unité éthylène.

Selon un autre mode de réalisation avantageux, l'élastomère diénique fortement saturé fonctionnel comprend de 65% à 90% molaire d'unité éthylène, particulièrement de 65% à 85% molaire d'unité éthylène. Plus avantageusement, l'élastomère diénique fortement saturé fonctionnel comprend de 65% à 80% molaire d'unité éthylène.

Selon encore un autre mode de réalisation avantageux de l'invention, l'élastomère diénique fortement saturé

fonctionnel comprend de 70% à 90% molaire d'unité éthylène, particulièrement de 70% à 85% molaire d'unité éthylène. Plus avantageusement, l'élastomère diénique fortement saturé fonctionnel comprend de 70% à 80% molaire d'unité éthylène.

L'élastomère diénique fortement saturé fonctionnel contient des unités d'un 1,3 diène. De manière connue, l'expression « unité d'un 1,3-diène » ou « unité diénique » fait référence aux unités résultant de l'insertion du 1,3-diène par une addition 1,4, une addition 1,2 ou une addition 3,4 dans le cas de l'isoprène par exemple. Les unités d'un 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène ou un mélange de 1,3-diènes dont un est le 1,3-butadiène. De manière plus préférentielle, le 1,3-diène est le 1,3-butadiène.

L'élastomère diénique fortement saturé fonctionnel contient de préférence des unités de formule (I) ou des unités de formule (II).

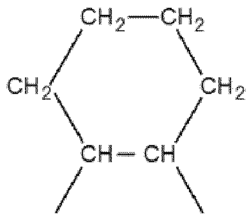

(I)

$-CH_2-CH(CH=CH_2)-$ (II)

La présence de motif cyclique saturé à 6 membres, 1,2-cyclohexanediyle, de formule (I) dans l'élastomère diénique fortement saturé fonctionnel peut résulter d'une série d'insertions très particulières de l'éthylène et du 1,3-butadiène dans la chaîne polymère au cours de sa croissance. Lorsque l'élastomère diénique fortement saturé fonctionnel comprend des unités de formule (I) ou des unités de formule (II), les pourcentages molaires des unités de formule (I) et des unités de formule (II) dans l'élastomère diénique fortement saturé fonctionnel, respectivement o et p, satisfont de préférence à l'équation suivante (eq. 1) ou à l'équation (eq. 2), o et p étant calculés sur la base de la totalité des unités de répétition constitutives de l'élastomère diénique fortement saturé fonctionnel.

$$0 < o+p \leq 30 \quad \text{(eq. 1)}$$

$$0 < o+p < 25 \quad \text{(eq. 2)}$$

De préférence, l'élastomère diénique fortement saturé fonctionnel comprend des unités de formule (I) selon un taux molaire supérieur à 0% et inférieur à 15%, plus préférentiellement inférieur à 10% molaire, pourcentage molaire calculé sur la base de la totalité des unités de répétition constitutives de l'élastomère diénique fortement saturé fonctionnel. Ces plages préférentielles de taux molaire des unités de formule (I) peuvent s'appliquer à l'un quelconque des modes de réalisation de l'invention.

L'élastomère diénique fortement saturé fonctionnel a aussi pour autre caractéristique de porter des groupes pendants contenant une fonction imidazole N-substituée. L'homme du métier comprend que les groupes pendants sont rattachés à l'élastomère par liaison covalente. Les groupes pendants contenant la fonction imidazole selon l'invention sont de préférence des groupes pendants répartis de façon statistique dans l'élastomère diénique fortement saturé fonctionnel. De préférence, le taux de la fonction imidazole dans l'élastomère diénique fortement saturé fonctionnel est inférieur à 3% en mole des unités de répétition constitutives de l'élastomère diénique fortement saturé fonctionnel. Typiquement il est supérieur à 0% et préférentiellement inférieur à 3%, plus préférentiellement supérieur à 0.02% et inférieur à 2%, encore plus préférentiellement supérieur à 0.07% et inférieur à 0.7%, pourcentage molaire calculé sur la base de la totalité des unités de répétition constitutives de l'élastomère diénique fortement saturé fonctionnel. Ces plages préférentielles de la teneur molaire de la fonction imidazole peuvent s'appliquer à l'un quelconque des modes de réalisation de l'invention.

La fonction imidazole N-substituée est préférentiellement un groupe de formule (4) dans laquelle le symbole $Y_1$ représente un atome d'hydrogène ou un alkyle ayant 1 à 6 atomes de carbone, le symbole $Y_2$ désigne un rattachement à une unité diénique de l'élastomère diénique fortement saturé fonctionnel, les symboles $Y_3$ et $Y_4$ sont chacun un atome d'hydrogène.

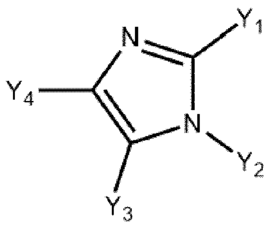

(4)

Avantageusement, elle est un groupe de formule (4) dans laquelle l'alkyle représenté par $Y_1$ contient 1 à 3 atomes de carbone, de préférence est méthyle.

On entend par rattachement à une unité diénique de l'élastomère diénique fortement saturé fonctionnel une liaison ou un groupe qui permet de relier de façon covalente le cycle à 5 membres de la fonction imidazole à ladite unité.

Selon un mode de réalisation de l'invention, l'élastomère diénique fortement saturé fonctionnel est un copolymère modifié d'éthylène et d'un 1,3-diène par réaction d'un agent de modification contenant un groupe réactif vis à vis d'unités diéniques et contenant une fonction imidazole de formule (5),

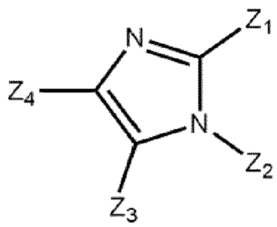

(5)

dans laquelle le symbole $Z_1$ représente un atome d'hydrogène ou un alkyle ayant 1 à 6 atomes de carbone, le symbole $Z_2$ désigne un rattachement au groupe réactif, les symboles $Z_3$ et $Z_4$ sont chacun un atome d'hydrogène.

Selon ce mode de réalisation, l'unité rattachée à la fonction imidazole N-substituée est une unité diénique modifiée par réaction de l'agent de modification, et l'élastomère diénique fortement saturé fonctionnel est obtenu par modification d'un élastomère diénique fortement saturé, dit élastomère diénique fortement saturé de départ, par une réaction de greffage de l'agent de modification sur des unités du 1,3-diène de l'élastomère diénique fortement saturé de départ, ce qui se traduit par la présence d'unités du 1,3-diène non modifiées et des unités du 1,3-diène modifiées dans l'élastomère diénique fortement saturé fonctionnel. Le groupe réactif de l'agent de modification peut être un dipôle susceptible de réagir avec des doubles liaisons carbone-carbone telles que des unités d'un 1,3-diène. Le dipôle peut être un groupe oxyde de nitrile, nitrone ou nitrile imine.

L'agent de modification est préférentiellement un composé 1,3-dipolaire oxyde de nitrile, nitrone ou nitrile imine, le groupe réactif de l'agent de modification étant alors un oxyde de nitrile, une nitrone ou un nitrile imine, encore plus préférentiellement un oxyde de nitrile. Le terme composé 1,3-dipolaire est compris selon la définition donnée par IUPAC. Le composé 1,3-dipolaire a pour caractéristique de comprendre un dipôle, un oxyde de nitrile, nitrone ou nitrile imine, et la fonction imidazole. Le dipôle constitue le groupe réactif de l'agent de modification vis-à-vis des unités diéniques. Le dipôle réagit typiquement avec les unités diéniques, notamment par réaction de cycloaddition [3+2].

De manière plus préférentielle, l'agent de modification est un composé 1,3-dipolaire qui est un monooxyde de nitrile aromatique, composé comprenant un noyau benzénique substitué par un dipôle oxyde de nitrile et substitué par un groupe contenant la fonction imidazole de formule (5) dans laquelle le symbole $Z_1$ représente un atome d'hydrogène ou un alkyle ayant 1 à 6 atomes de carbone, le symbole $Z_2$ désigne un rattachement au dipôle, les symboles $Z_3$ et $Z_4$ sont chacun un atome d'hydrogène.

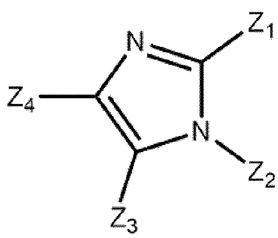

(5)

On entend par composé monooxyde de nitrile aromatique un composé aromatique qui contient un seul dipôle oxyde de nitrile et dans lequel le noyau benzénique est substitué par le dipôle oxyde de nitrile, ce qui signifie que l'atome de carbone du dipôle est lié directement par une liaison covalente à un atome de carbone du noyau benzénique. Le noyau

benzénique substitué par le dipôle oxyde de nitrile est aussi substitué par le groupe contenant la fonction imidazole. De préférence, le noyau benzénique est aussi substitué en ortho du dipôle.

Avantageusement, le composé 1,3-dipolaire contient un motif de formule (6) dans laquelle $R'_1$ représente le dipôle oxyde de nitrile, un des symboles $R'_2$ à $R'_6$ représente un groupe saturé ayant 1 à 6 atomes de carbone et lié de façon covalente à l'un des atomes d'azote du cycle à 5 membres de la fonction imidazole de formule (5), les autres symboles, identiques ou différents, représentant un atome d'hydrogène ou un substituant.

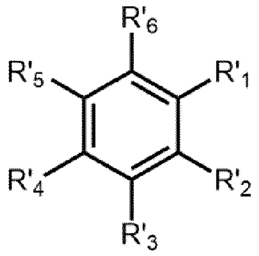

(6)

Le substituant dans la formule (6) peut être tout groupe tant qu'il ne réagit pas avec le dipôle. Le substituant dans la formule (6) peut former avec le substituant du carbone voisin un cycle. De préférence, le substituant dans la formule (6) est un alkyle ayant 1 à 3 atomes de carbone, préférentiellement méthyle ou éthyle, plus préférentiellement méthyle.

Le groupe saturé dans la formule (6) permet de lier de façon covalente la fonction imidazole au noyau benzénique substitué notamment par le dipôle oxyde de nitrile. Il peut contenir un ou plusieurs hétéroatomes. Il contient préférentiellement 1 à 3 atomes de carbone. Le groupe saturé dans la formule (6) est de préférence un alcanediyle, de manière plus préférentielle un alcanediyle ayant 1 à 3 atomes de carbone, de manière encore plus préférentielle méthanediyle.

Dans la formule (6), $R'_2$ et $R'_6$ sont préférentiellement différents d'un atome d'hydrogène. De préférence, $R'_2$, $R'_4$ et $R'_6$ sont tous différents d'un atome d'hydrogène et sont identiques.

La synthèse du composé 1,3-dipolaire peut être réalisée à partir d'une voie de synthèse relativement aisée à partir d'un précurseur commercialement disponible, par exemple le mésitylène, comme cela est décrit notamment dans le document WO 2015059269.

Avantageusement, le composé 1,3-dipolaire est le composé 2,4,6-triméthyl-3-((2-méthyl-1*H*-imidazol-1-yl) méthyl)benzo-nitrile oxyde de formule (7) ou le composé 2,4,6-triéthyl-3-((2-méthyl-1*H*-imidazol-1-yl)méthyl)benzonitrile oxyde de formule (8), plus avantageusement le composé de formule (7).

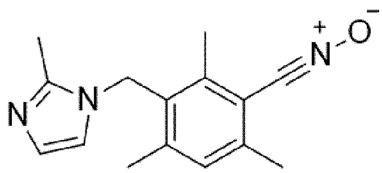

(7)

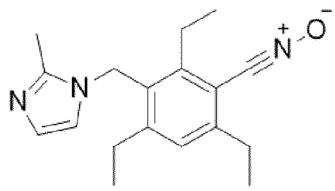

(8)

Selon une variante préférentielle de l'invention, l'élastomère diénique fortement saturé fonctionnel est un élastomère diénique fortement saturé qui est modifié, puisqu'il peut être obtenu par modification d'un élastomère diénique fortement saturé de départ dont une partie des unités diéniques sont modifiées par greffage d'un agent de modification tel que décrit précédemment. La modification peut être réalisée en masse ou en solution. L'élastomère diénique fortement saturé fonctionnel est préférentiellement un copolymère modifié d'éthylène et d'un 1,3-diène ou un copolymère d'éthylène et de plusieurs 1,3-diènes, le 1,3-diène étant avantageusement le 1,3-butadiène ou un mélange de 1,3-diènes dont un est le 1,3-butadiène. L'élastomère diénique fortement saturé fonctionnel est plus préférentiellement un copolymère modifié d'éthylène et de 1,3-butadiène. Avantageusement, l'élastomère diénique fortement saturé fonctionnel est un copolymère statistique modifié.

L'élastomère diénique fortement saturé de départ peut être obtenu selon différentes méthodes de synthèse connues de l'homme du métier, notamment en fonction de la microstructure visée de l'élastomère diénique fortement saturé fonctionnel. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé de départ, y

compris lorsqu'il est statistique, peut être préparé aussi par un procédé utilisant un système catalytique de type préformé comme ceux décrits dans les documents WO 2017093654 A1, WO 2018020122 A1 et WO 2018020123 A1. Avantageusement, l'élastomère diénique fortement saturé de départ est statistique et est préparé préférentiellement selon un procédé semi continu ou continu tel que décrit dans les documents WO 2017103543 A1, WO 201713544 A1, WO 2018193193 et WO 2018193194.

La composition de caoutchouc peut contenir en plus de l'élastomère diénique fortement saturé fonctionnel un deuxième élastomère diénique. On entend par élastomère diénique un élastomère constitué au moins en partie (i.e., un homopolymère ou un copolymère) d'unités monomères diènes (monomères porteurs de deux doubles liaisons carbone-carbone, conjuguées ou non). Le deuxième élastomère peut être choisi dans le groupe des élastomères diéniques fortement insaturés constitué par les polybutadiènes, les polyisoprènes, les copolymères de butadiène, les copolymères d'isoprène et leur mélange. On appelle un élastomère fortement insaturé un élastomère qui contient plus de 50% en mole d'unité diénique.

De préférence, le taux de l'élastomère diénique fortement saturé fonctionnel dans la composition de caoutchouc est d'au moins 50 parties en poids pour cent parties d'élastomère de la composition de caoutchouc (pce). De manière plus préférentielle, le taux de l'élastomère diénique fortement saturé fonctionnel dans la composition de caoutchouc varie dans un domaine allant de 80 à 100 pce. De manière encore plus préférentielle, il varie dans un domaine allant de 90 à 100 pce. Il est avantageusement de 100 pce. L'élastomère diénique fortement saturé fonctionnel peut être un seul élastomère diénique fortement saturé fonctionnel ou bien un mélange de plusieurs élastomères diéniques fortement saturés fonctionnels qui se différencient les uns des autres par leurs microstructures ou par leurs macrostructures. Dans le cas où la composition de caoutchouc contient plusieurs élastomères diéniques fortement saturés fonctionnels qui se différencient les uns des autres par leurs microstructures ou par leurs macrostructures, le taux de l'élastomère diénique fortement saturé fonctionnel dans la composition de caoutchouc se rapporte au mélange d'élastomères diéniques fortement saturés fonctionnels.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0.05 à 0.17]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR », « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge renforçante peut comprendre tout type de charge dite renforçante autre que la silice, connue pour ses capacités à renforcer une composition de caoutchouc utilisable notamment pour la fabrication de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Lorsque le noir de carbone est utilisé dans la composition de caoutchouc, il l'est de préférence à un taux inférieur ou égal à 10 pce (par exemple le taux de noir de carbone peut être compris dans un domaine allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

La silice représente préférentiellement plus de 50% en masse de la charge renforçante. En d'autres termes, la proportion de silice dans la charge renforçante est supérieure à 50% en poids du poids total de la charge renforçante. De manière plus préférentielle, la silice représente plus de 85% en masse de la charge renforçante.

Le taux total de charge renforçante peut varier dans un large domaine, par exemple de 30 pce à 150 pce. Selon un premier mode de réalisation, le taux total de charge renforçante varie dans un domaine allant de 30 pce à 60 pce. Selon un deuxième mode de réalisation, le taux total de charge renforçante varie dans un domaine allant de plus de 60 pce à 150 pce. Le premier mode de réalisation est préféré au deuxième mode de réalisation pour un usage de la composition de caoutchouc dans une bande de roulement ayant une très faible résistance au roulement. L'une quelconque de ces plages de taux total de charge renforçante peut s'appliquer à l'un quelconque des modes de réalisation de l'invention.

Pour coupler la silice à l'élastomère diénique fortement saturé fonctionnel, on utilise un agent de couplage (ou agent de liaison), un silane, au moins bifonctionnel destiné à assurer une connexion suffisante, de nature chimique et/ou physique, entre la silice et l'élastomère diénique. La composition de caoutchouc conforme à l'invention comprend à titre d'agent de couplage un silane organofonctionnel ayant au moins un motif mercaptosilane bloqué, au moins un motif mercaptosilane et au moins une fonction qui est un groupe hydroxyalcoxysilyle ou un groupe dialcoxysilyle cyclique. Le silane organofonctionnel répond à la formule (1) suivante :

$$(A)_p(B)_q \qquad (1)$$

dans laquelle

- A est un symbole représentant un motif mercaptosilane bloqué répondant à la formule (2)

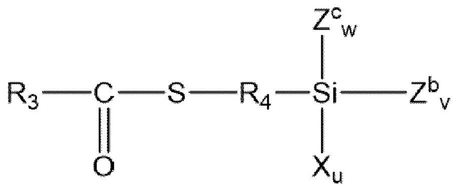

(2)

- B est un symbole représentant un motif mercaptosilane répondant à la formule (3)

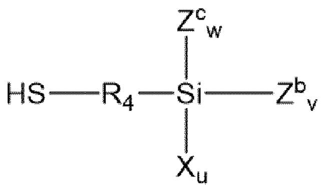

(3)

Dans la formule (2), $R_3$ est choisi parmi un atome d'hydrogène, un alkyle en $C_1$-$C_{18}$ , linéaire ou ramifié, un alcényle en $C_2$-$C_{18}$, linéaire ou ramifié,

Dans les formules (2) et (3), chaque $R_4$ est indépendamment choisi parmi les groupes divalents hydrocarbonés saturés en $C_1$-$C_6$, linéaires ou ramifiés, chaque $Z^b$ qui forme une structure de pontage entre un atome de silicium d'un motif et un atome de silicium d'un autre motif, ces motifs pouvant être identiques ou différents, est choisi indépendamment parmi $(\text{-O-})_{0,5}$ et $[\text{-O}(R^0CR^0)_f\text{O-}]_{0,5}$ avec les symboles $R^0$, identiques ou différents, représentant chacun un atome d'hydrogène ou un alkyle en $C_1$-$C_3$ et f étant un nombre compris dans un domaine allant de 2 à 15, chaque $Z^c$ qui forme une structure cyclique avec l'atome de silicium d'un motif est un groupe de formule $[\text{-O}(R^0CR^0)_f\text{O-}]_{0,5}$ avec $R^0$ et f tels que définis précédemment, chaque X est choisi indépendamment parmi un atome d'hydrogène, un groupe hydroxyle, un groupe alkyle en $C_1$-$C_6$, un groupe alcoxyle en $C_1$-$C_6$ et un groupe de formule $HO(R^0CR^0)_fO$- avec $R^0$ et f tels que définis précédemment, avec u+v+2w=3, u étant un nombre égal à 0, 1, 2 ou 3, v étant un nombre égal à 1, 2 ou 3 et w étant un nombre égal à 0 ou 1.

p est un nombre compris dans un domaine allant de 1 à 20, q est un nombre compris dans un domaine allant de 1 à 20.

Par « silane organofonctionnel », on entend au sens de la présente invention un silane ou un mélange de silanes ayant pour caractéristique de posséder au moins une fonction thiol bloquée, c'est-à-dire protégée, une fonction thiol, c'est-à-dire non protégée, et au moins une fonction qui est un groupe hydroxylalcoxysilyle ou un groupe dialcoxysilyle cyclique.

Par « motif mercaptosilane », on entend un motif qui contient au moins un atome de silicium et une fonction thiol (-SH) liée à un atome de carbone.

Par « motif mercaptosilane bloqué », on entend un motif qui contient au moins un atome de silicium et au moins une fonction thiol bloquée. Une fonction thiol bloquée peut par exemple être un groupe thioester -S-(CO)-R.

Dans le composé de formule (1), l'enchaînement des motifs de répétition mercaptosilane bloqué (A) et des motifs de répétition mercaptosilane (B) est indifférent. En particulier cet enchaînement peut être alterné (par exemple A-B-A-B-A-B), par bloc (par exemple A-A-A-B-B-B) ou statistique, c'est-à-dire que la distribution séquentielle desdits motifs (A) et (B) obéit à des lois statistiques connues.

Par groupe hydroxyalcoxy utilisée dans la dénomination hydroxyalcoxysilyle, on entend un groupe monovalent de formule $HO(R^0CR^0)_fO$- qui substitue l'atome de silicium, $R^0$ et f étant tels que définis précédemment.

Par groupe dialcoxysilyle cyclique, on entend un groupe dans lequel un atome de silicium est lié à deux atomes d'oxygène liés chacun à un atome de carbone distinct d'un même groupe alkylène.

Par « structure de pontage », on entend une structure chimique faite de liaison(s) covalente(s) permettant de lier entre eux deux motifs de répétition, ces motifs de répétition pouvant être identiques ou différents.

La dénomination en $C_n$-$C_m$ qualifiant un groupe fait référence au nombre d'atomes de carbone constitutifs du groupe qui contient n à m atomes de carbone, n et m étant des nombres entiers avec m supérieur à n.

De préférence, $R_3$ dans la formule (2) est choisi parmi l'atome d'hydrogène, les alkyles en $C_1$-$C_{10}$ et les alcényles en $C_2$-$C_{10}$. De manière plus préférentielle, $R_3$ dans la formule (2) est un alkyle en $C_6$-$C_8$ linéaire. De manière encore plus préférentielle, le symbole $R_3$ dans la formule (2) est heptyle ($C_7H_{15}$-).

De préférence, chaque $R_4$ dans les formules (2) et (3) est indépendamment un alkylène en $C_1$-$C_4$ linéaire. Plus préférentiellement, chaque $R_4$ est propylène.

De préférence, chaque $Z^b$ dans les formules (2) et (3) est choisi indépendamment dans le groupe constitué par les motifs de formule $(-O-)_{0,5}$, $[-OCH_2CH_2CH_2O-]_{0,5}$, $[-OCH_2CH_2CH_2CH_2O-]_{0,5}$ et $[-OCH_2CH(CH_3)CH_2O-]_{0,5}$. Plus préférentiellement, $Z^b$ dans les formules (2) et (3) est de formule $(-O-)_{0,5}$ ou de formule $[-OCH_2CH(CH_3)CH_2O-]_{0,5}$.

De préférence, chaque $Z^c$ dans les formules (2) et (3) est choisi indépendamment dans le groupe constitué par les motifs de formule $[-OCH_2CH_2CH_2O-]_{0,5}$, $[-OCH_2CH_2CH_2CH_2O-]_{0,5}$ et $[-OCH_2CH(CH_3)CH_2O-]_{0,5}$. Plus préférentiellement, chaque $Z^c$ dans les formules (2) et (3) est de formule $[-OCH_2CH(CH_3)CH_2O-]_{0,5}$.

De préférence, chaque X dans les formules (2) et (3) est choisi indépendamment dans le groupe constitué par hydroxyle, méthoxy, éthoxy, méthyle, éthyle, 3-hydroxypropoxy, 3-hydroxy-2-méthylpropoxy et 4-hydroxybut-1-oxy. Plus préférentiellement, chaque X dans les formules (2) et (3) est identique et est choisi dans le groupe constitué par hydroxyle, méthoxy, éthoxy et 3-hydroxy-2-méthylpropoxy.

Très avantageusement, dans les formules (2) et (3), $R_3$ est heptyle ($C_7H_{15}$-), chaque $R_4$ est propylène, chaque $Z^b$ est de formule $(-O-)_{0,5}$ ou $[-OCH_2CH(CH_3)CH_2O-]_{0,5}$, chaque $Z^c$ est de formule $[-OCH_2CH(CH_3)CH_2O-]_{0,5}$, chaque X est choisi dans le groupe constitué par hydroxyle, méthoxy, éthoxy et 3-hydroxy-2-methylpropoxy, avec u+v+2w=3, u étant 0, 1, 2 ou 3, v étant 1, 2 ou 3 et w étant 0 ou 1.

Les notations $(-O-)_{0,5}$ et $[-O(R^0CR^0)_fO-]_{0,5}$ se rapportent à la moitié d'une liaison de siloxane et à la moitié d'un groupe dialcoxy de pontage respectivement. Ces notations sont utilisées conjointement avec un atome de silicium des motifs de répétition de l'oligomère. Elles désignent la moitié d'un atome d'oxygène, à savoir la moitié de l'atome d'oxygène qui est lié à l'atome de silicium d'un motif de répétition ou la moitié d'un groupe dialcoxy, à savoir la moitié de l'atome du groupe dialcoxy qui est lié à l'atome de silicium d'un motif de répétition; étant entendu que l'autre moitié de l'atome d'oxygène ou du groupe dialcoxy respectivement se trouve lié à un autre atome de silicium d'un autre motif de répétition de la structure de l'oligomère ; les motifs de répétition pouvant être identiques ou différents. Ainsi, $(-O-)_{0,5}$ forme une liaison siloxane entre deux atomes de silicium appartenant chacun à un motif de répétition. $[-O(R^0CR^0)_fO-]_{0,5}$ peut former soit une structure de pontage (cette structure intermoléculaire étant représenté par $Z^b$) entre deux atomes de silicium appartenant chacun à un motif de répétition, soit une structure cyclique (cette structure intramoléculaire étant représentée par $Z^c$), les deux atomes d'oxygène de $[-O(R^0CR^0)_fO-]_{0,5}$ étant liés à l'atome de silicium du motif. L'homme du métier comprendra que dans le composé de formule (1), les structures de pontages peuvent être identiques ou différentes entre les motifs de répétition. Par exemple, les structures de pontage peuvent être de type - $Si-O(R^0CR^0)_fO-Si$- ou bien un mélange de structure de pontage de type $-Si-O(R^0CR^0)_fO-Si$-et de type -Si-O-Si-.

Préférentiellement, le silane organofonctionnel présente un pourcentage molaire des motifs mercaptosilanes bloqués (A) allant de 20 à 80 % et un pourcentage molaire des motifs mercaptosilanes (B) allant de 80 à 20%. Plus préférentiellement le silane organofonctionnel présente un pourcentage molaire des motifs mercaptosilanes bloqués (A) allant de de 40 à 60 % et un pourcentage molaire des motifs mercaptosilanes (B) allant de 60 à 40%. Encore plus préférentiellement, le silane organofonctionnel présente un pourcentage molaire des motifs mercaptosilanes bloqués allant de 50 à 55 % et un pourcentage molaire des motifs mercaptosilanes allant de 50 à 45%. Le pourcentage molaire des motifs mercaptosilanes bloqués et celui des motifs mercaptosilanes du silane organofonctionnel sont calculés par rapport au nombre total de motifs thiols, qu'ils soient bloqués ou non, dans le silane organofonctionnel et ils peuvent être déterminés par toute méthode bien connue de l'homme du métier, telle que par exemple l'analyse $^1H$ RMN.

L'agent de couplage, le silane organofonctionnel, peut être obtenu à partir d'un procédé de synthèse comprenant au moins une étape (a) de réaction de trans-estérification d'un composé diol de formule (9) avec au moins un composé mercaptosilane bloqué de formule (10) et avec au moins un composé mercaptosilane de formule (11) :

$$HO(R^0CR^0)_fOH \qquad (9)$$

$(RO)_3SiR_4SC(=O)R_3$ (10)

$(RO)_3SiR_4SH$ (11)

$R^0$ et f étant tels que définis précédemment, à savoir $R^0$, identique ou différent, représentant un atome d'hydrogène, un méthyle, un éthyle ou un propyle et f un nombre compris dans un domaine allant de 2 à 15,
R, identique ou différent, représentant un groupe alkyle en $C_1$-$C_6$ linéaire,
$R_3$ et $R_4$ étant tels que définis précédemment, à savoir $R_4$ représentant un groupe divalent hydrocarboné saturé en $C_1$-$C_6$, linéaire ou ramifié, $R_3$ représentant un atome d'hydrogène, un alkyle en $C_1$-$C_{18}$, linéaire ou ramifié, ou un alcényle en $C_2$-$C_{18}$, linéaire ou ramifié.

La réaction de trans-estérification est une réaction bien connue de l'homme du métier et peut être réalisée en présence d'un catalyseur de trans-estérification, comme par exemple, des acides forts.

Préférentiellement, dans le procédé décrit ci-dessus, le composé diol de formule (9) est choisi parmi $HOCH_2CH_2CH_2OH$, $HOCH_2CH_2CH_2CH_2OH$ et $HOCH_2CH(CH_3)CH_2OH$. Plus préférentiellement, dans le procédé décrit ci-dessus, le composé diol de formule (4) est $HOCH_2CH(CH_3)CH_2OH$.

Préférentiellement, les composés de formule (10) et (11) utilisés dans la mise en œuvre du procédé décrit ci-dessus sont ceux dans lesquels le groupe R est choisi parmi méthyle, éthyle, propyle, iso-propyle, n-butyle, iso-butyle

Préférentiellement, les composés de formule (10) utilisés dans la mise en œuvre du procédé décrit ci-dessus sont ceux dans lesquels $R_3$ représente un atome d'hydrogène, un alkyle en $C_1$-$C_{10}$, linéaire ou ramifié, ou un alcényle en C2-C10, linéaire ou ramifié. Plus préférentiellement, les composés de formule (10) utilisés dans la mise en œuvre du procédé décrit ci-dessus sont ceux dans lesquels $R_3$ est un alkyle en $C_6$-$C_8$ linéaire. Plus préférentiellement encore, les composés de formule (10) utilisés dans la mise en œuvre du procédé décrit ci-dessus sont ceux dans lesquels $R_3$ est heptyle ($C_7H_{15}$-).

De préférence, les composés de formule (10) et (11) utilisés dans la mise en œuvre du procédé décrit ci-dessus sont ceux dans lesquels chaque $R_4$ est indépendamment un groupe hydrocarboné divalent choisi dans le groupe constitué par les alkylènes en $C_1$-$C_4$ linéaire. Plus préférentiellement, les composés de formule (10) et (11) utilisés dans la mise en œuvre du procédé décrit ci-dessus sont ceux dans lesquels chaque $R_4$ est propylène.

Préférentiellement, les composés de formule (10) et (11) utilisés dans la mise en œuvre du procédé décrit ci-dessus sont ceux dans lesquels $R_3$ est heptyle, $R_4$ est propylène, R , identique ou différent (de préférence identique), est choisi parmi méthyle, éthyle, propyle, isopropyle, n-butyle, iso-butyle et le composé de formule (9) utilisé dans la mise en œuvre du procédé décrit ci-dessus est $HOCH_2CH(CH_3)CH_2OH$.

Des mélanges de composés de formule (10) et des mélanges de composés de formule (11) peuvent être utilisés pour synthétiser l'agent de couplage, le silane organofonctionnel.

Le procédé de synthèse de l'agent de couplage peut comprendre, en outre :

- au moins une étape de traitement (b) des produits obtenus à l'étape (a) pour convertir une partie des fonctions thiols bloquées, si présentes dans les produits obtenus à l'étape (a), en des fonctions thiols (-SH) et/ou
- au moins une étape de traitement (c) des produits obtenus à l'étape (a) pour convertir une partie des fonctions thiols, si présents dans les produits obtenus à l'étape (a), en des fonctions thiols bloquées et/ou
- au moins une étape (d) d'hydrolyse partielle des produits obtenus à l'étape (a), des produits obtenus à l'étape (b) si cette étape est mise en œuvre dans le procédé et des produits obtenus à l'étape (c) si cette étape est mise en œuvre dans le procédé.

L'étape de traitement (b) peut, par exemple, être une étape au cours de laquelle on utilise une base forte, par exemple, NaOEt, pour convertir les fonctions thiols bloquées portées par les produits obtenus à l'étape (a) en des fonctions thiols. L'étape de traitement (c) peut, par exemple, être une étape d'estérification des fonctions thiols des produits obtenus à l'étape (a) à l'aide d'un acide carboxylique (notamment $C_7H_{15}COOH$) ou d'un chlorure d'acyle (notamment $C_7H_{15}COCl$) pour les convertir en fonctions thiols bloquées. L'étape (d) d'hydrolyse partielle peut avoir lieu lorsqu'il y a un excès d'eau par rapport aux produits et réactifs utilisés au cours des étapes (a), et éventuellement des étapes (b) et (c) si présentes.

L'étape d'hydrolyse partielle permet d'obtenir les composés décrits ci-dessus dans lesquels $Z^b$ représente $(-O-)_{0,5}$ ou OH.

L'homme du métier pourra se référer notamment au document WO2007/098120 A2 qui décrit le procédé d'obtention de l'agent de couplage silane organofonctionnel.

L'agent de couplage organofonctionnel peut être obtenu sous la forme d'un mélange résultant de la mise en œuvre du procédé décrit ci-dessus et peut être utilisé dans la composition de caoutchouc conforme à l'invention sous la forme de ce mélange. Le mélange contient non seulement l'agent de couplage organofonctionnel, mais aussi d'autres

silanes choisis parmi l'un quelconque des composés suivants et leurs mélanges :

- un composé de formule (2') qui dérive de la formule (2), la formule (2') se différenciant de la formule (2) en ce que $Z^b_v$ est remplacé par $Z^a_t$, $Z^a$ ayant la même définition que le groupe X de la formule (2), t étant un nombre égal à 0, 1, 2 ou 3 avec u+t+2w= 3 et u et w ayant la même définition que dans la formule (2),
- un composé de formule (3') qui dérive de la formule (3), la formule (3') se différenciant de la formule (3) en ce que $Z^b_v$ est remplacé par $Z^a_t$, $Z^a$ ayant la même définition que le groupe X de la formule (3), t étant un nombre égal à 0, 1, 2 ou 3 avec u+t+2w= 3 et u et w ayant la même définition que dans la formule (3),
- un dimère constitué de deux motifs mercaptosilane bloqué de formule (2),
- un dimère constitué de deux motifs mercaptosilane de formule (3),
- un dimère constitué d'un motif de mercaptosilane bloqué (2) et d'un motif mercaptosilane de formule (3)
- un oligomère constitué de motifs mercaptosilane bloqué de formule (2),
- un oligomère constitué de motifs mercaptosilane de formule (3).

L'agent de couplage silane organofonctionnel est par exemple disponible commercialement auprès de Momentive. Inc sous la référence commerciale « NXT-Z », en particulier « NXT-Z45 ».

Dans la composition de caoutchouc conforme à l'invention, le taux de l'agent de couplage silane organofonctionnel est ajusté par l'homme du métier selon la surface spécifique de la silice utilisée dans la composition de caoutchouc et selon le taux de silice dans la composition de caoutchouc. Il varie préférentiellement de 1 à 15 pce, plus préférentiellement de 1.5 à 10 pce, encore plus préférentiellement de 2 à 5 pce.

La composition de caoutchouc conforme à l'invention a pour autre caractéristique essentielle de contenir un système de vulcanisation, c'est-à-dire un système de réticulation à base de soufre. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0.5 et 4 pce, celui de l'accélérateur primaire est de préférence compris entre 0.5 et 5 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

La vulcanisation est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

La composition de caoutchouc conforme à l'invention peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, des plastifiants tels que des huiles ou des résines plastifiantes.

La composition de caoutchouc, avant vulcanisation, peut être fabriquée dans des mélangeurs appropriés, en utilisant deux phases de préparation successives selon une procédure bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au

cours de laquelle on introduit, dans un mélangeur approprié tel qu'un mélangeur interne usuel, tous les constituants nécessaires, les éventuels agents de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres, le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (avant réticulation ou après vulcanisation). Elle peut constituer tout ou partie d'un article semi-fini, en particulier destiné à être utilisé dans un bandage pneumatique ou non pneumatique qui comporte une bande de roulement, notamment dans la bande de roulement du bandage.

Les caractéristiques précitées de la présente invention, ainsi que d'autres, seront mieux comprises à la lecture de la description suivante de plusieurs exemples de réalisation de l'invention, donnés à titre illustratif et non limitatif.

**Exemples**

<u>Propriétés à la rupture</u> :

Les essais de traction permettent de déterminer les propriétés à la rupture. Sauf indication différente, ils sont effectués conformément à la norme française NF T 46-002 de septembre 1988, avec une éprouvette de type H2, la vitesse de traction étant de 500 mm/min. Les contraintes à la rupture (en MPa) et les allongements à la rupture (en %) sont mesurés à 60°C $\pm$ 2°C selon la norme NF T 46-002, ainsi qu'à 100°C$\pm$ 2°C.

Les résultats sont exprimés en base 100 par rapport à un témoin. Une valeur supérieure à celle du témoin, arbitrairement fixée à 100, indique un résultat amélioré, c'est-à-dire une grandeur mesurée supérieure à celle du témoin.

<u>Microstructure des élastomères par analyse de résonance magnétique nucléaire (RMN) :</u>

La microstructure des élastomères est déterminée par analyse RMN $^1H$, suppléée par l'analyse RMN $^{13}C$ lorsque la résolution des spectres RMN du $^1H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré ($CDCl_3$). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré ($CDCl_3$). Le solvant ou coupage de solvant utilisé doit toujours être deutéré et sa nature chimique peut être adaptée par l'homme du métier.

Dans les deux cas (échantillon soluble ou échantillon gonflé) :

> Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
> Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

Température de transition vitreuse des polymères :

La température de transition vitreuse (Tg) est mesurée au moyen d'un calorimètre différentiel ("Differential Scanning Calorimeter") selon la norme ASTM D3418 (1999).

Viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0.83 Newton.mètre).

Préparation d'un élastomère diénique fortement saturé de départ, E1 :

L'élastomère E1 est un élastomère diénique fortement saturé, copolymère d'éthylène et de 1,3-butadiène préparé selon le mode opératoire suivant :

Dans un réacteur de 70 L contenant du méthylcyclohexane (64 L), de l'éthylène (5600 g) et du 1,3-butadiène (2948 g), on ajoute du butyloctylmagnésium (BOMAG) en solution dans le méthylcyclohexane et le système catalytique. Le ratio Mg/Nd est de 6.2. Le volume de la solution du système catalytique introduit est de 840 mL, la concentration de la solution du système catalytique en Nd étant 0.0065 M. La température de réaction est régulée à une température de 80°C et la réaction de polymérisation démarre. La réaction de polymérisation se déroule à une pression constante de 8.3 bars. Le réacteur est alimenté tout au long de la polymérisation en éthylène et en 1,3-butadiène dans les proportions molaires 73/27. La réaction de polymérisation est stoppée par refroidissement, dégazage du réacteur et ajout d'éthanol. Un anti-oxydant est ajouté à la solution de polymère. Le copolymère est récupéré après un stripping à la vapeur d'eau et séchage jusqu'à masse constante. La durée de polymérisation est de 225 minutes. La masse pesée (6.206 kg) permet de déterminer l'activité catalytique moyenne du système catalytique exprimée en kilogramme de polymère synthétisé par mole de métal néodyme et par heure (kg/mol.h). Le copolymère possède une valeur de ML égale à 62.

Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$ à 0.0065 mol/L, d'un co-catalyseur, le butyloctylmagnésium (BOMAG) dont le ratio molaire BOMAG/Nd est égal à 2.2, et d'un monomère de préformation, le 1,3-butadiène dont le ratio molaire 1,3-butadiène/Nd est égal à 90. Le milieu est chauffé à 80°C sur une durée de 5h. Il est préparé selon une méthode de préparation conforme au paragraphe II.1 de la demande de brevet WO 2017093654 A1.

Préparation des compositions de caoutchouc :

On utilise comme agent de modification un composé 1,3-dipolaire, le 2,4,6-triméthyl-3-((2-méthyl-1H-imidazol-1-yl)méthyl)benzonitrile oxyde dont la synthèse est décrite dans la demande de brevet WO 2015059274.

On utilise comme élastomère diénique fortement saturé de départ l'élastomère E1.

Quatre compositions de caoutchouc sont préparées. On procède pour la fabrication de ces compositions de la manière suivante :

On introduit dans un mélangeur interne de 400 mL (taux de remplissage final : environ 70% en volume), dont la température initiale de cuve est d'environ 80°C, l'élastomère diénique fortement saturé de départ E1, l'agent de modification qui est malaxé seul avec l'élastomère pendant environ 1 minutes à 120°C, puis la silice, l'agent de couplage silane, ainsi que les divers autres ingrédients à l'exception du système de vulcanisation. On conduit alors un travail thermomécanique (phase non-productive) en une étape, qui dure environ 5 min à 6 minutes pour une vitesse moyenne de palette de 100 tours/minute, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant 5 minutes.

Les compositions de caoutchouc contiennent toutes un élastomère diénique fortement saturé fonctionnel selon l'invention, un système de vulcanisation, une silice et un agent de couplage silane. Seules les compositions de caoutchouc C1 et C2 sont conformes à l'invention, puisque l'agent de couplage silane est un silane organofonctionnel de formule (1) selon l'invention, le « NXT-Z45 » commercialisé par la société Momentive. Les compositions T1 et T2 se distinguent respectivement des compositions C1 et C2 en ce que l'agent de couplage est un silane polysulfure, le tétrasulfure de bis(3-triéthoxysilylpropyl), en abrégé TESPT de formule $[(C_2H_5O)_3Si(CH_2)_3S_2]_2$ commercialisé sous la dénomination « Si69 » par la société Evonik. Le taux total de soufre est identique pour les compositions de caoutchouc qui sont comparées entre elles, sachant que dans le cas des compositions de caoutchouc T1 et T2, l'agent de couplage « Si69 » relargue du soufre libre au cours de sa réaction avec l'élastomère, ce qui représente une source de soufre disponible pour la vulcanisation,

soit 0.3 pce.

Les formulations (en pce) des compositions de caoutchouc sont décrites dans le tableau 1.

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques après vulcanisation à 150°C (état cuit), soit sous la forme de profilés directement utilisables, après découpage et/ou assemblage aux dimensions souhaitées, par exemple comme produits semi-finis pour pneumatiques.

Les résultats des propriétés à l'état cuit des compositions de caoutchouc sont consignés dans le tableau 2.

Le tableau 2 montre que l'allongement à la rupture des compositions de caoutchouc C1 et C2 est fortement augmentée par rapport à leur composition témoin respective, T1 et T2, aussi bien à 60°C qu'à 100°C. Ce résultat est obtenu sans que la contrainte à la rupture ne soit dégradée. Les compositions de caoutchouc selon l'invention présentent donc une forte amélioration des propriétés à la rupture.

Tableau 1

| Compositions (en pce) | T1 | C1 | T2 | C2 |
|---|---|---|---|---|
| E1 (1) | 100 | 100 | 100 | 100 |
| Silice (2) | 38 | 38 | 46 | 46 |
| Agent de couplage Si69 (3) | 3.1 | | 3.7 | |
| Agent de couplage NXTZ45 (4) | | 3.1 | | 3.7 |
| Composé 1.3-dipolaire (5) | 1.1 | 1.1 | 1.3 | 1.3 |
| DPG (6) | 1.2 | 1.2 | 1.4 | 1.4 |
| Cire Ozone (7) | 1 | 1 | 1 | 1 |
| Antioxydant 6PPD (8) | 2 | 2 | 2 | 2 |
| Acide stéarique (9) | 2 | 2 | 2 | 2 |
| ZnO (10) | 2.5 | 2.5 | 2.5 | 2.5 |
| Soufre | 1 | 1.3 | 1 | 1.3 |
| CBS (11) | 1 | 1 | 1 | 1 |

(1) Copolymère d'éthylène et de 1,3-butadiène contenant 74% en mole d'unité éthylène, 19% d'unité butadiène sous la forme de motifs 1,2 et 1,4 et 7% en mole de motif 1,2-cyclohexanediyle, de Tg -44°C
(2) "Zeosil 1165 MP" de Solvay-Rhodia sous forme de microperles
(3) Silane liquide triethoxysilylpropyltetrasulfure (TESPT) « Si69 » de la société Evonik
(4) Silane Mercapto - Thiocarboxylate Oligomer (« NXT-Z45 ») - CAS 922519-17-3 - société Momentive
(5) Composé 1,3-dipolaire (2,4,6-triméthyl-3-((2-méthyl-lH-imidazol-1-yl)méthyl)benzonitrile oxyde)
(6) Diphénylguanidine « Perkacit DPG » de la société Flexsys
(7) Cire anti-ozone « VARAZON 4959 » de la société Sasol Wax
(8) N-(1,3-diméthylbutyl)-N'-phényl-p-phenylènediamine « Santoflex 6PPD » de la société Flexys
(9) Acide stéarique « Pristerene 4931 » de la société Uniqema
(10) Oxyde de Zinc de grade industriel de la société Umicore
(11) N-cyclohexyl-2-benzothiazol-sulfénamide « Santocure CBS » de la société Flexsys.

Tableau 2

| Compositions | T1 | C1 | T2 | C2 |
|---|---|---|---|---|
| Déformation rupture à 60°C | 100 | 173 | 100 | 170 |
| Contrainte rupture à 60°C | 100 | 160 | 100 | 148 |
| Déformation rupture à 100°C | 100 | 165 | 100 | 163 |
| Contrainte rupture à 100°C | 100 | 133 | 100 | 125 |

## Revendications

**1.** Composition de caoutchouc qui comprend :

- un élastomère diénique fortement saturé fonctionnel, copolymère qui contient des unités éthylène, des unités d'un 1,3-diène et qui porte des groupes pendants contenant une fonction imidazole N-substituée, les unités éthylène représentant plus de 50% en mole des unités de répétition constitutives de l'élastomère diénique fortement saturé fonctionnel,
- un système de vulcanisation,
- une charge renforçante qui contient une silice,
- et un agent de couplage silane organofonctionnel ayant au moins une fonction thiol bloquée, au moins une fonction thiol et au moins une fonction qui est un groupe hydroxyalcoxysilyle ou un groupe dialcoxysilyle cyclique et répondant à la formule (1) $(A)_p(B)_q$ (1)

dans laquelle A et B représentent respectivement un motif mercaptosilane bloqué répondant à la formule (2) et un motif mercaptosilane répondant à la formule (3)

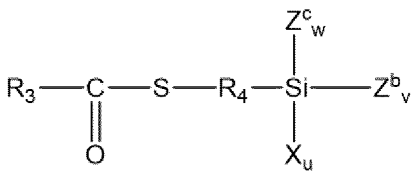
(2)

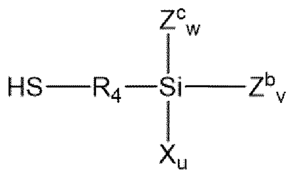
(3)

dans lesquelles

$R_3$ est choisi parmi un atome d'hydrogène, un alkyle en $C_1$-$C_{18}$ , linéaire ou ramifié, un alcényle en $C_2$-$C_{18}$, linéaire ou ramifié,
chaque $R_4$ est indépendamment choisi parmi les groupes divalents hydrocarbonés saturés en $C_1$-$C_6$, linéaires ou ramifiés,
chaque $Z^b$ qui forme une structure de pontage entre un atome de silicium d'un motif et un atome de silicium d'un autre motif, ces motifs pouvant être identiques ou différents, est choisi indépendamment parmi $(-O-)_{0,5}$ et $[-O(R^0CR^0)_fO-]_{0,5}$ avec les symboles $R^0$, identiques ou différents, représentant chacun un atome d'hydrogène ou un alkyle en $C_1$-$C_3$ et f étant un nombre compris dans un domaine allant de 2 à 15,
chaque $Z^c$ qui forme une structure cyclique avec l'atome de silicium d'un motif est un groupe de formule $[-O(R^0CR^0)_fO-]_{0,5}$ avec $R^0$ et f tels que définis précédemment, chaque X est choisi indépendamment parmi un atome d'hydrogène, un groupe hydroxyle, un groupe alkyle en $C_1$-$C_6$, un groupe alcoxyle en $C_1$-$C_6$ et un groupe de formule $HO(R^0CR^0)_fO$- avec $R^0$ et f tels que définis précédemment,
avec u+v+2w=3, u étant un nombre égal à 0, 1, 2 ou 3, v étant un nombre égal à 1, 2 ou 3 et w étant un nombre égal à 0 ou 1,
p est un nombre compris dans un domaine allant de 1 à 20,
q est un nombre compris dans un domaine allant de 1 à 20.

**2.** Composition de caoutchouc selon la revendication 1 dans laquelle la fonction imidazole N-substituée est un groupe de formule (4) dans laquelle le symbole $Y_1$ représente un atome d'hydrogène ou un alkyle ayant 1 à 6 atomes de carbone, le symbole $Y_2$ désigne un rattachement à une unité diénique de l'élastomère diénique fortement saturé fonctionnel, les symboles $Y_3$ et $Y_4$ sont chacun un atome d'hydrogène.

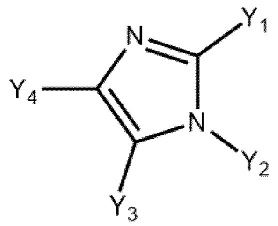

(4)

3. Composition de caoutchouc selon l'une quelconque des revendication 1 à 2 dans laquelle l'élastomère diénique fortement saturé fonctionnel est un copolymère modifié d'éthylène et d'un 1,3-diène par réaction d'un agent de modification contenant un groupe réactif vis à vis d'unités diéniques et contenant une fonction imidazole de formule (5),

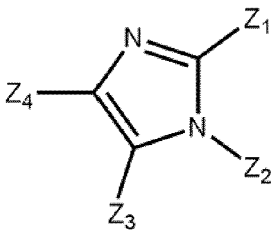

(5)

dans laquelle le symbole $Z_1$ représente un atome d'hydrogène ou un alkyle ayant 1 à 6 atomes de carbone, le symbole $Z_2$ désigne un rattachement au groupe réactif, les symboles $Z_3$ et $Z_4$ sont chacun un atome d'hydrogène, l'agent de modification étant préférentiellement un composé 1,3-dipolaire oxyde de nitrile, nitrone ou nitrile imine.

4. Composition de caoutchouc selon la revendication 3 dans laquelle l'agent de modification est un composé 1,3-dipolaire qui est un monooxyde de nitrile aromatique, composé comprenant un noyau benzénique substitué par un dipôle oxyde de nitrile et par un groupe contenant la fonction imidazole de formule (5) dans laquelle le symbole $Z_1$ représente un atome d'hydrogène ou un alkyle ayant 1 à 6 atomes de carbone, le symbole $Z_2$ désigne un rattachement au dipôle, les symboles $Z_3$ et $Z_4$ sont chacun un atome d'hydrogène.

5. Composition de caoutchouc selon l'une quelconque des revendication 3 à 4 dans laquelle le composé 1,3-dipolaire contient un motif de formule (6) dans laquelle $R'_1$ représente le dipôle oxyde de nitrile, un des symboles $R'_2$ à $R'_6$ représente un groupe saturé ayant 1 à 6 atomes de carbone et lié de façon covalente à l'un des atomes d'azote du cycle à 5 membres de la fonction imidazole de formule (5), les autres symboles, identiques ou différents, représentant un atome d'hydrogène ou un substituant.

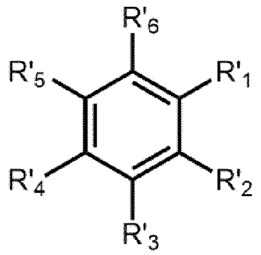

(6)

6. Composition de caoutchouc selon l'une quelconque des revendications 1 à 5 dans laquelle le 1,3-diène est le 1,3-butadiène ou un mélange de 1,3-diènes dont un est le 1,3-butadiène, de préférence le 1,3-butadiène.

7. Composition de caoutchouc selon l'une quelconque des revendications 1 à 6 dans laquelle l'élastomère diénique fortement saturé fonctionnel est un copolymère statistique.

8. Composition de caoutchouc selon l'une quelconque des revendications 1 à 7 dans laquelle la silice représente plus de 50% en masse de la charge renforçante, préférentiellement plus de 85% en masse de la charge renforçante.

9. Composition de caoutchouc selon l'une quelconque des revendications 1 à 8 dans laquelle $R_3$ dans la formule (2) est

choisi parmi l'atome d'hydrogène, les alkyles en $C_1$-$C_{10}$ et les alcényles en $C_2$-$C_{10}$, préférentiellement est un alkyle en $C_6$-$C_8$ linéaire, plus préférentiellement est heptyle.

**10.** Composition de caoutchouc selon l'une quelconque des revendications 1 à 9 dans laquelle chaque $R_4$ dans les formules (2) et (3) est indépendamment un alkylène en $C_1$-$C_4$ linéaire, préférentiellement propylène.

**11.** Composition de caoutchouc selon l'une quelconque des revendications 1 à 10 dans laquelle chaque $Z^b$ dans les formules (2) et (3) est choisi indépendamment dans le groupe constitué par les motifs de formule $(-O-)_{0,5}$, $[-OCH_2CH_2CH_2O-]_{0,5}$, $[-OCH_2CH_2CH_2CH_2O-]_{0,5}$ et $[-OCH_2CH(CH_3)CH_2O-]_{0,5}$, préférentiellement est de formule $(-O-)_{0,5}$ ou $[-OCH_2CH(CH_3)CH_2O-]_{0,5}$.

**12.** Composition de caoutchouc selon l'une quelconque des revendications 1 à 11 dans laquelle chaque $Z^c$ dans les formules (2) et (3) est choisi indépendamment dans le groupe constitué par les motifs de formule $[-OCH_2CH_2CH_2O-]_{0,5}$, $[-OCH_2CH_2CH_2CH_2O-]_{0,5}$ et $[-OCH_2CH(CH_3)CH_2O-]_{0,5}$ , préférentiellement est de formule $[-OCH_2CH(CH_3)CH_2O-]_{0,5}$.

**13.** Composition de caoutchouc selon l'une quelconque des revendications 1 à 12 dans laquelle chaque X dans les formules (2) et (3) est choisi indépendamment dans le groupe constitué par hydroxyle, méthoxy, éthoxy, méthyle, éthyle, 3-hydroxypropoxy, 3-hydroxy-2-méthylpropoxy et 4-hydroxybut-1-oxy, préférentiellement chaque X dans les formules (2) et (3) est identique et est choisi dans le groupe constitué par hydroxyle, méthoxy, éthoxy et 3-hydroxy-2-méthylpropoxy.

**14.** Composition de caoutchouc selon l'une quelconque des revendications 1 à 13 dans laquelle le silane organofonctionnel présente un pourcentage molaire des motifs mercaptosilanes bloqués (A) allant de 20 à 80 % et un pourcentage molaire des motifs mercaptosilanes (B) allant de 80 à 20%, préférentiellement le silane organofonctionnel présente un pourcentage molaire des motifs mercaptosilanes bloqués (A) allant de de 40 à 60 % et un pourcentage molaire des motifs mercaptosilanes (B) allant de 60 à 40%, plus préférentiellement le silane organofonctionnel présente un pourcentage molaire des motifs mercaptosilanes bloqués allant de 50 à 55 % et un pourcentage molaire des motifs mercaptosilanes allant de 50 à 45%.

**15.** Pneumatique qui comprend une composition de caoutchouc définie à l'une quelconque des revendications 1 à 14, préférentiellement dans sa bande de roulement.

## Patentansprüche

**1.** Kautschukzusammensetzung, die Folgendes umfasst:

- ein funktionelles hochgesättigtes Dienelastomer, bei dem es sich um ein Copolymer handelt, das Ethyleneinheiten und Einheiten eines 1,3-Diens enthält und das Seitengruppen mit einer N-substituierten Imidazolfunktion trägt, wobei die Ethyleneinheiten mehr als 50 Mol-% der Wiederholungseinheiten, aus denen das funktionelle hochgesättigte Dienelastomer aufgebaut ist, ausmachen,
- ein Vulkanisationssystem,
- einen verstärkenden Füllstoff, der eine Kieselsäure enthält,
- und ein organofunktionelles Silan-Kupplungsmittel mit mindestens einer blockierten Thiolfunktion, mindestens einer Thiolfunktion und mindestens einer Funktion, bei der es sich um eine Hydroxyalkoxysilylgruppe oder eine cyclische Dialkoxysilylgruppe handelt, und mit der Formel (1) $(A)_p(B)_q$ (1),

wobei A und B für eine blockierte Mercaptosilaneinheit, die der Formel (2) entspricht, bzw. eine Mercaptosilaneinheit, die der Formel (3) entspricht, stehen:

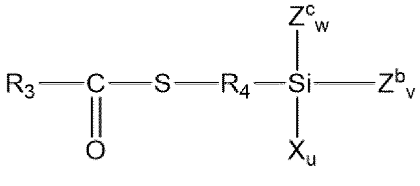

(2)

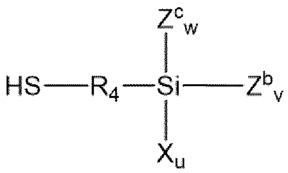

(3)

wobei

$R_3$ aus einem Wasserstoffatom, einem linearen oder verzweigten $C_1$-$C_{18}$-Alkyl, einem linearen oder verzweigten $C_2$-$C_{18}$-Alkenyl ausgewählt ist,
$R_4$ jeweils unabhängig aus linearen oder verzweigten, gesättigten zweiwertigen $C_1$-$C_6$-Kohlenwasserstoffgruppen ausgewählt sind,
$Z^b$, das eine Brückenstruktur zwischen einem Siliciumatom einer Einheit und einem Siliciumatom einer anderen Einheit bildet, wobei diese Einheiten gleich oder verschieden sein können, jeweils unabhängig aus $(\text{-O-})_{0,5}$ und $[\text{-O}(R^0CR^0)_f\text{O-}]_{0,5}$ ausgewählt ist, wobei die Symbole $R^0$, die gleich oder verschieden sein können, jeweils für ein Wasserstoffatom oder ein $C_1$-$C_3$-Alkyl stehen und f eine ganze Zahl in einem Bereich von 2 bis 15 ist, $Z^c$, das mit dem Siliciumatom einer Einheit eine cyclische Struktur bildet, jeweils eine Gruppe der Formel $[\text{-O}(R^0CR^0)_f\text{O-}]_{0,5}$ ist, wobei $R^0$ und f wie oben definiert sind, X jeweils unabhängig aus einem Wasserstoffatom, einer Hydroxylgruppe, einer $C_1$-$C_6$-Alkylgruppe, einer $C_1$-$C_6$-Alkoxygruppe und einer Gruppe der Formel $HO(R^0CR^0)_fO$-ausgewählt ist, wobei $R^0$ und f wie oben definiert sind, wobei u+v+2w=3, wobei u eine Zahl gleich 0, 1, 2 oder 3 ist, wobei v eine Zahl gleich 1, 2 oder 3 ist und w eine Zahl gleich 0 oder 1 ist,
p eine Zahl in einem Bereich von 1 bis 20 ist;
q eine Zahl in einem Bereich von 1 bis 20 ist.

**2.** Kautschukzusammensetzung nach Anspruch 1, wobei es sich bei der N-substituierten Imidazolfunktion um eine Gruppe der Formel (4) handelt, wobei das Symbol $Y_1$ für ein Wasserstoffatom oder ein Alkyl mit 1 bis 6 Kohlenstoffatomen steht, das Symbol $Y_2$ eine Bindung an eine Dieneinheit des funktionellen hochgesättigten Dienelastomers bezeichnet und die Symbole $Y_3$ und $Y_4$ jeweils ein Wasserstoffatom sind.

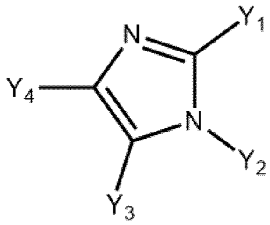

(4)

**3.** Kautschukzusammensetzung nach einem der Ansprüche 1 bis 2, wobei es sich bei dem funktionellen hochgesättigten Dienelastomer um ein durch Umsetzung mit einem Modifizierungsmittel, das eine gegenüber Dieneinheiten reaktive Gruppe enthält und eine Imidazolfunktion der Formel (5) enthält, modifiziertes Copolymer von Ethylen und einem 1,3-Dien handelt,

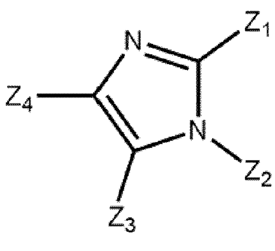

(5)

wobei das Symbol $Z_1$ für ein Wasserstoffatom oder ein Alkyl mit 1 bis 6 Kohlenstoffatomen steht, das Symbol $Z_2$ eine Bindung an die reaktive Gruppe bezeichnet und die Symbole $Z_3$ und $Z_4$ jeweils ein Wasserstoffatom sind, wobei es sich bei dem Modifizierungsmittel bevorzugt um eine 1,3-dipolare Nitriloxid-, Nitron- oder Nitrilimin-Verbindung handelt.

**4.** Kautschukzusammensetzung nach Anspruch 3, wobei es sich bei dem Modifizierungsmittel um eine 1,3-dipolare

Verbindung handelt, bei der es sich um ein aromatisches Nitrilmonooxid handelt, wobei die Verbindung einen Benzolkern, der durch einen Nitriloxid-Dipol und durch eine Gruppe mit der Imidazolfunktion der Formel (5) substituiert ist, umfasst, wobei das Symbol $Z_1$ für ein Wasserstoffatom oder ein Alkyl mit 1 bis 6 Kohlenstoffatomen steht, das Symbol $Z_2$ eine Bindung an den Dipol bezeichnet und die Symbole $Z_3$ und $Z_4$ jeweils ein Wasserstoffatom sind.

**5.** Kautschukzusammensetzung nach einem der Ansprüche 3 bis 4, wobei die 1,3-dipolare Verbindung eine Einheit der Formel (6) enthält, wobei $R'_1$ für den Nitriloxid-Dipol steht, eines der Symbole $R'_2$ bis $R'_6$ für eine gesättigte Gruppe mit 1 bis 6 Kohlenstoffatomen, die kovalent an eines der Stickstoffatome des 5-gliedrigen Rings der Imidazolfunktion der Formel (5) gebunden ist, steht, wobei die anderen Symbole, die gleich oder verschieden sein können, für ein Wasserstoffatom oder einen Substituenten stehen.

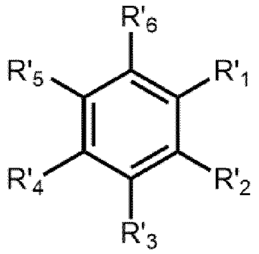
(6)

**6.** Kautschukzusammensetzung nach einem der Ansprüche 1 bis 5, wobei es sich bei dem 1,3-Dien um 1,3-Butadien oder eine Mischung von 1,3-Dienen, von denen eines 1,3-Butadien ist, vorzugsweise 1,3-Butadien, handelt.

**7.** Kautschukzusammensetzung nach einem der Ansprüche 1 bis 6, wobei es sich bei dem funktionellen hochgesättigten Dienelastomer um ein statistisches Copolymer handelt.

**8.** Kautschukzusammensetzung nach einem der Ansprüche 1 bis 7, wobei die Kieselsäure mehr als 50 Massen-% des verstärkenden Füllstoffs, bevorzugt mehr als 85 Massen-% des verstärkenden Füllstoffs, ausmacht.

**9.** Kautschukzusammensetzung nach einem der Ansprüche 1 bis 8, wobei $R_3$ in der Formel (2) aus einem Wasserstoffatom, $C_1$-$C_{10}$-Alkylgruppen und $C_2$-$C_{10}$-Alkenylgruppen ausgewählt ist und bevorzugt ein lineares $C_6$-$C_8$-Alkyl und weiter bevorzugt Heptyl ist.

**10.** Kautschukzusammensetzung nach einem der Ansprüche 1 bis 9, wobei $R_4$ in den Formeln (2) und (3) jeweils unabhängig ein lineares $C_1$-$C_4$-Alkylen, bevorzugt Propylen, ist.

**11.** Kautschukzusammensetzung nach einem der Ansprüche 1 bis 10, wobei $Z^b$ in den Formeln (2) und (3) jeweils unabhängig aus der Gruppe bestehend aus Einheiten der Formel $(\text{-O-})_{0,5}$, $[\text{-OCH}_2\text{CH}_2\text{CH}_2\text{O-}]_{0,5}$, $[\text{-OCH}_2\text{CH}_2\text{CH}_2\text{CH}_2\text{O-}]_{0,5}$ und $[\text{-OCH}_2\text{CH(CH}_3\text{)CH}_2\text{O-}]_{0,5}$ ausgewählt ist und bevorzugt die Formel $(\text{-O-})_{0,5}$ oder $[\text{-OCH}_2\text{CH(CH}_3\text{)CH}_2\text{O-}]_{0,5}$ aufweist.

**12.** Kautschukzusammensetzung nach einem der Ansprüche 1 bis 11, wobei $Z^c$ in den Formeln (2) und (3) jeweils unabhängig aus der Gruppe bestehend aus Einheiten der Formel $[\text{-OCH}_2\text{CH}_2\text{CH}_2\text{O-}]_{0,5}$, $[\text{-OCH}_2\text{CH}_2\text{CH}_2\text{CH}_2\text{O-}]_{0,5}$ und $[\text{-OCH}_2\text{CH(CH}_3\text{)CH}_2\text{O-}]_{0,5}$ ausgewählt ist und bevorzugt die Formel $[\text{-OCH}_2\text{CH(CH}_3\text{)CH}_2\text{O-}]_{0,5}$ aufweist.

**13.** Kautschukzusammensetzung nach einem der Ansprüche 1 bis 12, wobei X in den Formeln (2) und (3) jeweils unabhängig aus der Gruppe bestehend aus Hydroxyl, Methoxy, Ethoxy, Methyl, Ethyl, 3-Hydroxypropoxy, 3-Hydroxy-2-methylpropoxy und 4-Hydroxybut-1-oxy ausgewählt ist und bevorzugt X in den Formeln (2) und (3) jeweils gleich ist und aus der Gruppe bestehend aus Hydroxyl, Methoxy, Ethoxy und 3-Hydroxy-2-methylpropoxy ausgewählt ist.

**14.** Kautschukzusammensetzung nach einem der Ansprüche 1 bis 13, wobei das organofunktionelle Silan einen Molprozentanteil an blockierten Mercaptosilaneinheiten (A) im Bereich von 20 bis 80 % und einen Molprozentanteil an Mercaptosilaneinheiten (B) im Bereich von 80 bis 20 % aufweist, bevorzugt das organofunktionelle Silan einen Molprozentanteil an blockierten Mercaptosilaneinheiten (A) im Bereich von 40 bis 60 % und einen Molprozentanteil an Mercaptosilaneinheiten (B) im Bereich von 60 bis 40 % aufweist, weiter bevorzugt das organofunktionelle Silan einen Molprozentanteil an blockierten Mercaptosilaneinheiten im Bereich von 50 bis 55 % und einen Molprozentanteil an

Mercaptosilaneinheiten im Bereich von 50 bis 45 % aufweist.

**15.** Reifen, der eine Kautschukzusammensetzung gemäß einem der Ansprüche 1 bis 14 umfasst, bevorzugt in seiner Lauffläche.

## Claims

**1.** Rubber composition which comprises:

- a functional highly saturated diene elastomer, a copolymer which contains ethylene units, and 1,3-diene units and which bears pendent groups containing an N-substituted imidazole function, the ethylene units representing more than 50 mol% of the constitutional repeating units of the functional highly saturated diene elastomer,
- a vulcanization system,
- a reinforcing filler containing a silica,
- and an organofunctional silane coupling agent containing at least one blocked thiol function, at least one thiol function and at least one function which is a hydroxyalkoxysilyl group or a cyclic dialkoxysilyl group and corresponding to formula (1)

$$(A)_p(B)_q \qquad (1)$$

in which A and B respectively represent a blocked mercaptosilane unit corresponding to formula (2) and a mercaptosilane unit corresponding to formula (3)

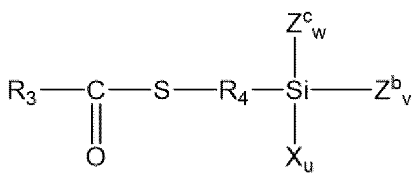

(2)

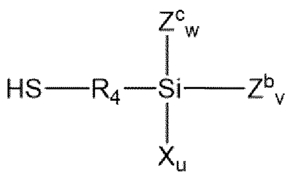

(3)

in which:

$R_3$ is selected from a hydrogen atom, a linear or branched $C_1$-$C_{18}$ alkyl, a linear or branched $C_2$-$C_{18}$ alkenyl,
each $R_4$ is independently selected from linear or branched, saturated $C_1$-$C_6$ divalent hydrocarbon-based groups,
each $Z^b$ which forms a bridging structure between a silicon atom of one unit and a silicon atom of another unit, which units may be identical or different, is independently selected from $(\text{-O-})_{0.5}$ and $[\text{-O}(R^0CR^0)_f\text{O-}]_{0,5}$ with the symbols $R^0$, which may be identical or different, each representing a hydrogen atom or a $C_1$-$C_3$ alkyl and f being a number ranging from 2 to 15,
each $Z^c$ which forms a cyclic structure with the silicon atom of a unit is a group of formula $[\text{-O}(R^0CR^0)_f\text{O-}]_{0.5}$ with $R^0$ and f as defined previously,
each X is selected independently from a hydrogen atom, a hydroxyl group, a $C_1$-$C_6$ alkyl group, a $C_1$-$C_6$ alkoxy group and a group of formula $HO(R^0CR^0)_fO$- with $R^0$ and f as defined previously,
with u+v+2w = 3, u being a number equal to 0, 1, 2 or 3, v being a number equal to 1, 2 or 3 and w being a number equal to 0 or 1,
p is a number within a range extending from 1 to 20,
q is a number within a range extending from 1 to 20.

**2.** Rubber composition according to Claim 1, in which the N-substituted imidazole function is a group of formula (4) in which the symbol $Y_1$ represents a hydrogen atom or an alkyl having 1 to 6 carbon atoms, the symbol $Y_2$ denotes an attachment to a diene unit of the functional highly saturated diene elastomer, the symbols $Y_3$ and $Y_4$ are each a

hydrogen atom.

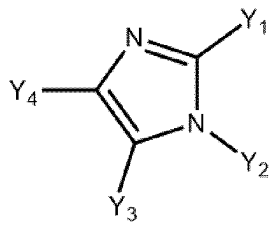

(4)

3. Rubber composition according to either one of Claims 1 and 2, in which the functional highly saturated diene elastomer is a copolymer of ethylene and of a 1,3-diene modified by reacting a modifying agent containing a group that is reactive with respect to diene units and containing an imidazole function of formula (5),

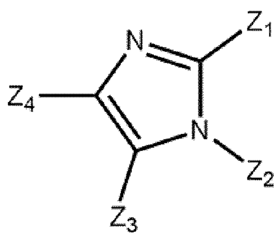

(5)

in which the symbol $Z_1$ represents a hydrogen atom or an alkyl having 1 to 6 carbon atoms, the symbol $Z_2$ denotes an attachment to the reactive group, the symbols $Z_3$ and $Z_4$ are each a hydrogen atom,
the modifying agent preferentially being a 1,3-dipolar nitrile oxide, nitrone or nitrile imine compound.

4. Rubber composition according to Claim 3, in which the modifying agent is a 1,3-dipolar compound which is an aromatic nitrile monooxide, which is a compound comprising a benzene ring substituted with a nitrile oxide dipole and with a group containing the imidazole function of formula (5) in which the symbol $Z_1$ represents a hydrogen atom or an alkyl having 1 to 6 carbon atoms, the symbol $Z_2$ denotes an attachment to the dipole, the symbols $Z_3$ and $Z_4$ are each a hydrogen atom.

5. Rubber composition according to any one of Claims 3 and 4, in which the 1,3-dipolar compound contains a unit of formula (6) in which $R'_1$ represents the nitrile oxide dipole, one of the symbols $R'_2$ to $R'_6$ represents a saturated group having 1 to 6 carbon atoms and covalently bonded to one of the nitrogen atoms of the 5-membered ring of the imidazole function of formula (5), the other symbols, which may be identical or different, representing a hydrogen atom or a substituent.

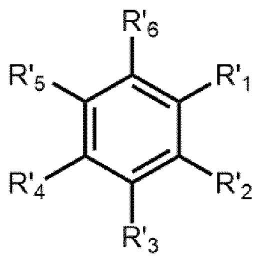

(6)

6. Rubber composition according to any one of Claims 1 to 5, in which the 1,3-diene is 1,3-butadiene or a mixture of 1,3-dienes, one of which is 1,3-butadiene, preferably 1,3-butadiene.

7. Rubber composition according to any one of Claims 1 to 6, in which the functional highly saturated diene elastomer is a statistical copolymer.

8. Rubber composition according to any one of Claims 1 to 7, in which silica represents more than 50% by mass of the reinforcing filler, preferentially more than 85% by mass of the reinforcing filler.

**9.** Rubber composition according to any one of Claims 1 to 8, in which $R_3$ in formula (2) is selected from the hydrogen atom, $C_1$-$C_{10}$ alkyls and $C_2$-$C_{10}$ alkenyls, and is preferentially a linear $C_6$-$C_8$ alkyl, more preferentially heptyl.

**10.** Rubber composition according to any one of Claims 1 to 9, in which each $R_4$ in formulae (2) and (3) is independently a linear $C_1$-$C_4$ alkylene, preferentially propylene.

**11.** Rubber composition according to any one of Claims 1 to 10, in which each $Z^b$ in formulae (2) and (3) is independently selected from the group consisting of units of formulae $(-O-)_{0.5}$, $[-OCH_2CH_2CH_2O-]_{0.5}$, $[-OCH_2CH_2CH_2CH_2O-]_{0.5}$ and $[-OCH_2CH(CH_3)CH_2O-]_{0.5}$, and is preferentially of formula $(-O-)_{0.5}$ or $[-OCH_2CH(CH_3)CH_2O-]_{0.5}$.

**12.** Rubber composition according to any one of Claims 1 to 11, in which each $Z^c$ in formulae (2) and (3) is independently selected from the group consisting of units of formulae $[-OCH_2CH_2CH_2O-]_{0.5}$, $[-OCH_2CH_2CH_2CH_2O-]_{0.5}$ and $[-OCH_2CH(CH_3)CH_2O-]_{0.5}$, and is preferentially of formula $[-OCH_2CH(CH_3)CH_2O-]_{0.5}$.

**13.** Rubber composition according to any one of Claims 1 to 12, in which each X in formulae (2) and (3) is independently selected from the group consisting of hydroxyl, methoxy, ethoxy, methyl, ethyl, 3-hydroxypropoxy, 3-hydroxy-2-methylpropoxy and 4-hydroxybut-1-oxy; preferentially, each X in formulae (2) and (3) is identical and is selected from the group consisting of hydroxyl, methoxy, ethoxy and 3-hydroxy-2-methylpropoxy.

**14.** Rubber composition according to any one of Claims 1 to 13, in which the organofunctional silane has a molar percentage of blocked mercaptosilane units (A) ranging from 20% to 80% and a molar percentage of mercaptosilane units (B) ranging from 80% to 20%, preferentially the organofunctional silane has a molar percentage of blocked mercaptosilane units (A) ranging from 40% to 60% and a molar percentage of mercaptosilane units (B) ranging from 60% to 40%, more preferentially the organofunctional silane has a molar percentage of blocked mercaptosilane units ranging from 50% to 55% and a molar percentage of mercaptosilane units ranging from 50% to 45%.

**15.** Tyre which comprises a rubber composition defined in any one of Claims 1 to 14, preferentially in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A1
- WO 2018224776 A1
- WO 03018332 A
- FR 2898077
- WO 2015059269 A
- EP 1092731 A
- WO 2004035639 A
- WO 2007054223 A
- WO 2007054224 A
- WO 2017093654 A1
- WO 2018020122 A1
- WO 2018020123 A1
- WO 2017103543 A1
- WO 201713544 A1
- WO 2018193193 A
- WO 2018193194 A
- WO 03016215 A1
- WO 03016387 A1
- WO 2007098120 A2
- WO 2015059274 A


### Littérature non-brevet citée dans la description


- **BRUNAUER-EMMETT-TELLER**. *The Journal of the American Chemical Society*, February 1938, vol. 60, 309
- *CHEMICAL ABSTRACTS*, 922519-17-3